# FASCICULE DE BREVET EUROPEEN

(11) **EP 1 483 673 B1**
(45) Date de publication et mention de la délivrance du brevet: **09.07.2008**
(21) Numéro de dépôt: 03702906.3
(22) Date de dépôt: 18.02.2003
(51) Int. Cl.: G06F 12/02

(54) **METHODE DE STOCKAGE DE BLOCS DE DONNEES DANS UNE MEMOIRE**
VERFAHREN ZUR SPEICHERUNG VON DATEN IN EINEM SPEICHER
METHOD FOR STORING DATA BLOCKS IN A MEMORY

(30) Priorité: 20.02.2002 CH 294022002
(43) Date de publication de la demande: 08.12.2004
(73) Titulaire: NagraCard SA, 1033 Cheseaux-sur-Lausanne (CH)
(72) Inventeur: GROUX, Cédric, CH-1071 Chexbres (CH)
(74) Mandataire: Wenger, Joel-Théophile
(86) Numéro de dépôt international: PCT/IB2003/000621
(87) Numéro de publication internationale: WO 2003/071430

(56) Documents cités:
- WO-A-00/36511
- US-A- 5 568 423
- US-A- 6 115 799
- US-B1- 6 249 802
- BIGET P ET AL: "How smart cards can benefit from object-oriented technologies" FUTURE GENERATIONS COMPUTER SYSTEMS, ELSEVIER SCIENCE PUBLISHERS. AMSTERDAM, NL, vol. 13, no. 1, 1 juillet 1997 (1997-07-01), pages 75-90, XP004081711 ISSN: 0167-739X

## Description

La présente invention est du domaine du stockage de données dans une mémoire numérique réinscriptible à semi-conducteurs qui conserve son contenu en cas de coupure de courant. Plus particulièrement, l'invention concerne la gestion de la place mémoire disponible par une méthode de stockage de blocs de données dans la mémoire.

Les mémoires à semi-conducteurs sont utilisées dans toutes les applications comprenant des microprocesseurs pour lesquelles il est nécessaire de stocker le programme et les données nécessaires à leur fonctionnement.

Les données sont, en général, introduites dans la mémoire à des adresses prédéterminées c'est-à-dire définies lors de l'élaboration du programme ou soit de manière séquentielle c'est-à-dire par blocs successifs à la suite des données déjà présentes dans la mémoire. Ces blocs peuvent également être réinscrits à la place d'autres blocs présents dans le but de renouveler des données revenues obsolètes. Un bloc est une suite de bit ou d'octets de longueur ou de taille prédéfinie comportant une entête contenant un identificateur du bloc et un nombre définissant sa longueur.

Suivant les instructions du programme, les données sont stockées dans la mémoire à des emplacements définis par des adresses. Ces dernières sont fixées par des paramètres contenus dans le programme. Ces emplacements réservés sont situés dans une zone quelconque de la mémoire dont les limites sont définies par une plage d'adresses. Cet intervalle ainsi déterminé correspond à la capacité disponible qui est en général plus grande que la quantité maximale de données pouvant y être stockée.

US-A-6 115 799 (OGAWA TAKESHI) décrit un gestionnaire de mémoire où le stockage de blocs de données dans une mémoire se fait d'après l'algorithme de la zone libre suivante (Next Fit).

US-B1-6 249 802 (RICHARDSON JOHN L ET AL) décrit une architecture DSM de mémoire distribuée, la mémoire étant distribuée entre les noeuds processeurs du réseau. Le gestionnaire de mémoire distribuée peut commencer à chercher une zone disponible à des emplacements qui peuvent être déterminés de manière aléatoire, la mémoire étant ainsi distribuée de manière plus équitable dans le réseau.

Dans US-A-5 568 423 (JOU EDWIN ET AL), pour limiter l'usage de la mémoire, le stockage de données se fait d'après un algorithme qui détermine la zone libre à utiliser d'après le nombre de fois que la zone a déjà été utilisée.

WO 00/36511 A (TRIERWEILER FRANZ ;BULL CP8 (FR); DIENER SEBASTIEN (FR)) décrit un procédé de stockage d'informations d'un module de sécurité, dans lequel on définit deux zones mémoires dont une est destinée à stocker les informations par morceaux dispersés et l'autre est destinée à stocker les adresses où se trouvent les morceaux d'informations. Le stockage dans la seconde zone mémoire s'effectue en des positions qui sont fonctions de l'adresse des morceaux d'information dans la première zone mémoire telle que définie avant dispersion. Ainsi, les informations se trouvent être dispersées dans les moyens de stockage, ce qui empêche en pratique leur repérage.

De nombreuses applications de traitement de données de plus en plus sophistiquées sont embarquées sur des supports physiques de taille de plus en plus réduite. Par conséquent, la capacité des mémoires utilisées par les microprocesseurs devra être optimisée au maximum. Ces cas se présentent par exemple dans différents modules électroniques comme les cartes à puces ou tout autre support comportant des composants de traitement numérique de données miniaturisés.

Certaines applications notamment de contrôle d'accès, d'identification d'un utilisateur ou de paiement électronique, doivent répondre à des exigences de sécurité de plus en plus élevées afin d'éviter les fraudes. En effet, les fonctionnalités d'une carte peuvent être révélées suite à des analyses approfondies du contenu de la mémoire associée au processeur. Par exemple, le mécanisme d'un débit sur une carte de paiement produit un ensemble de données qui vont être stockées à des emplacements de la mémoire prédéterminés par le programme. A chaque opération effectuée par la carte correspond une configuration bien définie des données dans la mémoire. Cette situation laisse une porte ouverte au piratage des cartes dont les fonctionnalités peuvent être copiées ou simulées sur d'autres cartes.

Le but de la présente invention est de proposer une méthode de stockage sécurisé de données dans une mémoire de manière à éviter les contrefaçons par analyse de son contenu. Un autre but consiste à limiter l'usure de la mémoire par une gestion améliorée des zones de lecture / écriture des données.

Ce but est atteint par une méthode de stockage d'une pluralité de blocs de données dans une mémoire numérique à semi-conducteurs réinscriptible pilotée par un gestionnaire de mémoire, ladite méthode comprenant les étapes suivantes:
- déterminer aléatoirement une zone disponible,
- stocker le bloc de données dans la zone ainsi choisie.

On entend par zone disponible une zone de la mémoire libre de données ou qui contient des données remplaçables par de nouvelles comme dans le cas d'une mise à jour par exemple.

La méthode selon l'invention permet le stockage de blocs de données dans des emplacements de mémoire toujours différents même si le programme effectue une suite d'opérations identiques. Par exemple une opération de débit de 10 unités sur une carte n'aura pas le même effet sur la structure du contenu de la mémoire à chaque exécution du même débit. De plus deux cartes identiques qui exécutent une opération identique auront une structure du contenu de leur mémoire complètement différente. Ainsi une analyse des données d'une carte ne permet pas de reproduire une image des opérations de la première carte sur l'autre et vice versa.

En plus de l'aspect sécurité, la méthode de l'invention permet, grâce à la lecture / écriture dans des zones choisies aléatoirement, une meilleure répartition de l'usure de la mémoire. Il n'y aura donc pas de régions dans la mémoire qui s'usent plus rapidement que d'autres comme dans le cas où de nombreux cycles de lecture / écriture de données s'effectueraient toujours à un endroit réservé dans la mémoire.

Le choix aléatoire d'une zone mémoire disponible peut s'effectuer selon plusieurs variantes:
1- Le résultat obtenu après l'exploration de la mémoire constitue une liste d'adresses correspondant à des zones disponibles. Cette liste est conservée temporairement dans une mémoire vive. Une adresse est ensuite choisie aléatoirement dans cette liste, puis le bloc de données est stocké dans la zone de la mémoire indiquée par cette adresse. Une variante de cette méthode consiste à maintenir en permanence une table des zones disponibles et de choisir une adresse aléatoirement parmi celles-ci.
2- L'exploration de la mémoire détermine le nombre maximum de zones disponibles. Un choix aléatoire d'un nombre n compris entre 1 et le nombre de zones trouvées désigne la zone où le bloc doit être stocké. Par exemple 20 zones disponibles sont trouvées, le choix aléatoire d'un nombre compris entre 1 et 20 donne 8, le bloc est alors stocké dans la 8^{ème} zone disponible.
3- Un nombre N est déterminé aléatoirement entre 1 et le nombre maximum de zones possibles. Le gestionnaire de mémoire cherche séquentiellement la N^{ième} zone disponible et si la fin de la mémoire est atteinte avant que cette zone ne soit trouvée, le gestionnaire reprend la recherche depuis le début de la mémoire jusqu'à ce que la N^{ième} zone disponible soit trouvée.

L'invention sera mieux comprise grâce à la description détaillée qui va suivre et qui se réfère aux dessins annexés qui sont donnés à titre d'exemple à savoir:
La figure 1 montre le stockage de blocs de données de longueur égale dans une portion de mémoire.
La figure 2 montre le stockage de blocs de longueur variable.
La figure 3 illustre le stockage de blocs en tenant compte d'un pas prédéterminé.

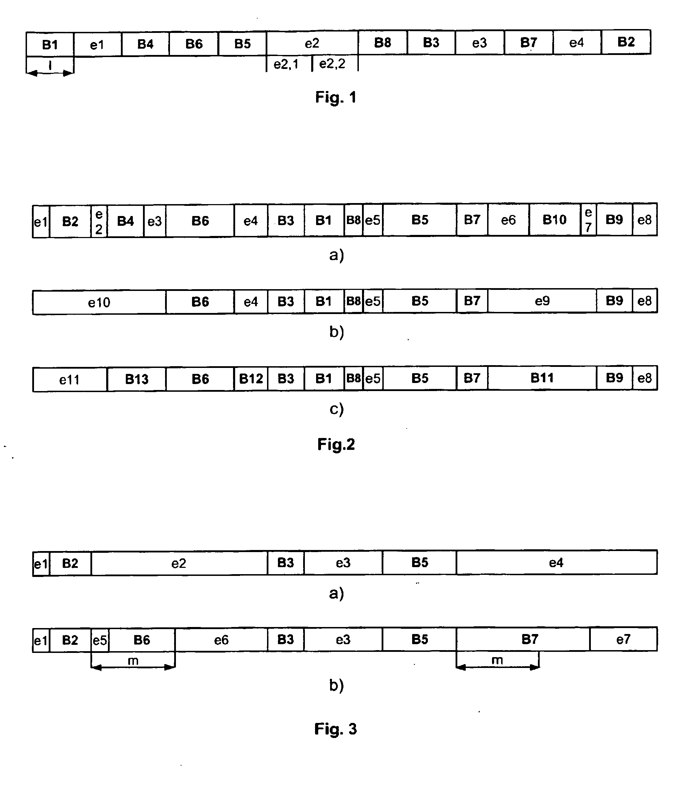

La figure 1 illustre un cas où les blocs de données ont tous une longueur l égale. Ils sont mémorisés aléatoirement dans des zones disponibles dont la longueur correspond à un multiple de la longueur d'un bloc à mémoriser. Par exemple les blocs ont tous une longueur de 10 octets, ils pourront être répartis au hasard dans des emplacements de 10, 20, 30, 40, etc. octets. La zone disponible peut être plus grande que le bloc à mémoriser. Par exemple un bloc de 10 octets B8 peut être placé dans un espace e2 de 30 octets et avec un décalage de 20 octets par rapport au début de l'emplacement disponible, c'est-à-dire à 20 octets du bloc précédent B5.

Lors du stockage d'un nouveau bloc Bn, selon la première variante de l'invention, le gestionnaire de mémoire va explorer la mémoire et en déduire les adresses disponibles de e1, e2,1, e2,2, e3 et e4 étant entendu que l'espace e2 permet de stocker deux blocs de longueur fixe. Une fois ces adresses déterminées, une variable aléatoire peut être utilisée pour définir l'adresse de la zone disponible où sera stocké le bloc Bn.

Selon la seconde variante, le gestionnaire trouve 5 zones disponibles dont la longueur correspond à celle des blocs à stocker. Un choix au hasard d'un nombre compris entre 1 et 5 donne 3, le bloc Bn sera donc stocké dans la 3^{ème} zone, c'est-à-dire dans e2,2.

Selon la troisième variante, le nombre de maximum de zones disponibles Z est 13. Le gestionnaire détermine aléatoirement un nombre N entre 1 et 13, par exemple 8 puis il parcourt la mémoire pour trouver la 8^{ème} place disponible. Une première passe permet de révéler que 5 zones sont disponibles et une seconde passe depuis le début détermine que l'emplacement e2,2 (le 3^{ème}) correspond à la 8^{ème} place. En résumé, si le nombre aléatoire N déterminé est plus grand que le nombre de places disponibles P, le rang de l'espace libre est défini par le nombre aléatoire N modulo le nombre de places P disponibles. Ici dans l'exemple, N=8 étant plus grand que P=5, alors le bloc sera stocké à la place 8 modulo 5 = 3^{ème} place. Dans le cas particulier où N modulo P donne 0, le bloc peut être placé à la première ou à la dernière place. Selon une autre variante, le nombre aléatoire N peut être redéfini jusqu'à obtenir une valeur N modulo P différente de zéro.

La figure 2 a) représente le cas où les blocs ont une longueur variable et sont séparés ou non par des zones libres. Par exemple un bloc B2 de 20 octets débute à 5 octets du bloc précédent et se termine 5 octets avant le bloc B4. Les zones ou espaces libres e1 et e2 autour de B2 pourront être occupés si B2 et B4 par exemple doivent être remplacés. Il en va de même pour tous les autres espaces libres qui sont soit occupés, soit se déplacent lors du stockage de nouveaux blocs Bn à la place des précédents.

Un nouveau bloc Bn pourra être stocké dans les espaces libres restants ou se substituer à un ou plusieurs blocs déjà présents et devenus inutiles. L'espace ainsi libéré permet le stockage de plusieurs blocs plus petits ou d'un bloc plus grand occupant tout ou partie de l'espace. Les figures b) et c) montrent un exemple de mise à jour: un nouveau bloc B12 a été stocké dans l'espace libre e4. B10 est remplacé par un bloc B11 plus grand occupant ainsi tout l'espace e9 libéré entre B7 et B9. Les blocs B2 et B4 ont été remplacés par B13 occupant la moitié de l'espace e10 libéré. Le nouvel espace libre e11 ainsi créé sera exploité lors d'un prochain stockage de blocs.

Selon une autre variante de la méthode de l'invention illustrée par la figure 3, le programme détermine une longueur courante m des blocs de données à mémoriser. Cette valeur peut correspondre à la longueur la plus fréquente des blocs ou dans certains cas à la longueur moyenne des blocs. Après le choix aléatoire de la zone de stockage disponible, le bloc sera mémorisé soit directement à la suite d'un bloc déjà présent dans le cas où ce bloc serait de longueur égale ou supérieure à cette longueur m, soit avec un décalage de n octets afin que la longueur du bloc et du décalage n soit égale à la longueur m. Cette variante permet, lors de l'effacement de ce bloc, de libérer un espace qui sera très rapidement utilisé. Sans ce décalage prévu lors du stockage, la place libérée par ce bloc aura très peu de chance d'être réutilisée.

Selon notre exemple la longueur courante m des blocs est de 15 octets, les blocs ont des longueurs variant entre 5 et 20 octets. Deux cas se présentent:

Si la longueur du bloc Bn à stocker est plus petite que la longueur m courante, Bn est stocké à un pas m du bloc précédent de façon à laisser un espace libre égal à la différence entre m et la longueur de Bn. Selon l'exemple ci-dessus, un bloc de 10 octets se place à 15-10 = 5 octets du bloc précédent. La figure 3 a) montre des blocs séparés par des zones disponibles. Dans la figure 3 b), un bloc B6 est stocké dans l'espace libre e2, la longueur de B6 étant plus petite que la longueur courante m, B6 se place à un pas m à partir du bloc précédent B2. L'espace e5 entre B2 et B6 équivaut à la différence de longueur entre m et la longueur de B6.

Si la longueur du bloc Bn à stocker est plus grande ou égale à la longueur m courante, Bn se place immédiatement après le bloc précédent. Dans la figure 3 b), B7 est plus grand que la valeur m, il se place donc dans e4 à la suite de B5 sans laisser d'espace libre entre eux.

La méthode selon l'invention peut aussi s'appliquer à des mémoires plus importantes ayant une structure en forme de table ou de matrice permettant un accès direct aux blocs de données. Des pointeurs définissent dans ce cas les emplacements disponibles dans la mémoire. Ces derniers sont choisis aléatoirement avant le stockage des blocs de données dans la mémoire.

Les données dont les blocs ont été stockés selon la méthode de l'invention peuvent être reconstituées par l'analyse, soit des identificateurs contenus dans les entêtes des blocs, soit des adresses de chaque bloc contenues dans une table préalablement mémorisée.

Dans une forme de l'invention, la table contenant les pointeurs d'accès direct est contenue dans une seconde mémoire sécurisée. Il est ainsi possible que la mémoire principale soit non sécurisée telle qu'une mémoire d'un ordinateur et la table de pointeurs est stockées dans un module de sécurité (une carte à puce ou élément similaire). Chaque bloc de données comprend un identifiant qui sera transmis à la carte avec éventuellement la taille des données. En retour, la carte détermine aléatoirement un pointeur parmi les pointeurs libres tels que décrit plus haut et retourne ce pointeur à l'ordinateur hôte. Parallèlement, la carte stocke l'identifiant des données avec la valeur du pointeur.

On constate dès lors qu'il est possible de ne plus stocker l'identifiant avec le bloc de données dans la mémoire principale, cette information étant uniquement dans la mémoire sécurisée. Le fait de stocker dans la mémoire principale des blocs dépourvus leur identifiant empêchera donc toute identification de ces blocs par analyse de la mémoire.

En cas de lecture, l'identifiant est transmis à la carte qui recherche dans sa mémoire sécurisée le pointeur correspondant, pointeur qui sera retourné à l'ordinateur hôte pour accéder aux blocs de données dans la mémoire principale.

Ainsi, chaque contenu de mémoire principale est unique et ne peut être transporté d'un ordinateur vers un autre. Il doit être impérativement accompagné de l'élément de sécurité qui stocke la table de pointeurs.

## Revendications

1. Méthode de stockage d'une pluralité de blocs de données dans une mémoire numérique à semi-conducteurs réinscriptible pilotée par un gestionnaire de mémoire, ladite méthode comprenant les étapes suivantes:
- déterminer aléatoirement une zone disponible,
- stocker le bloc de données dans la zone ainsi choisie.

2. Méthode selon la revendication 1 comprenant une étape préalable d'exploration de la mémoire effectuée par le gestionnaire, ladite exploration déterminant les zones disponibles.

3. Méthode selon la revendication 2 dans laquelle le résultat obtenu après l'exploration de la mémoire constitue une liste d'adresses de zones disponibles conservée temporairement dans une seconde mémoire, une adresse est ensuite choisie aléatoirement dans ladite liste, puis le bloc de données est stocké dans la zone de la mémoire indiquée par cette adresse.

4. Méthode selon la revendication dans laquelle l'exploration de la mémoire détermine le nombre de zones disponibles, un choix aléatoire d'un nombre compris entre 1 et le nombre de zones trouvé désigne la zone où le bloc doit être stocké.

5. Méthode selon la revendication 1 dans laquelle un nombre N est déterminé aléatoirement compris 1 et le nombre maximum de zones disponibles possibles, le gestionnaire de mémoire cherche séquentiellement la N^{ième} zone disponible et si la fin de la mémoire est atteinte avant que ladite zone ne soit trouvée, le gestionnaire reprend la recherche depuis le début de la mémoire jusqu'à ce que la N^{ième} zone disponible soit trouvée.

6. Méthode selon les revendications 1 à 5 dans laquelle les blocs sont de longueur variable, le stockage d'un bloc dans la mémoire s'effectue dans une zone disponible de longueur égale ou supérieure à la longueur du bloc.

7. Méthode selon les revendications 1 à 5 dans laquelle les blocs de données sont tous de même longueur, les zones de mémoire disponibles ayant une longueur égale ou supérieure à un multiple de la longueur des blocs.

8. Méthode selon les revendications 1 à 6 comprenant une étape préalable de détermination de la longueur courante m des blocs à mémoriser, les blocs Bn de longueur plus petite que ladite valeur courante sont stockés à un pas m du bloc précédent de façon à laisser un espace libre égal à la différence entre la longueur courante (m) et la longueur du bloc (Bn), les blocs (Bn) de longueur égale ou plus grande que la longueur courante (m) sont stockés immédiatement après le bloc précédent.

9. Méthode selon la revendication 1 dans laquelle la mémoire est à accès direct aux données au moyen d'une table de pointeurs, lesdits pointeurs sont choisis aléatoirement avant le stockage des blocs de données dans la mémoire.

10. Méthode selon la revendication 9 dans laquelle la table de pointeurs est stockée dans une mémoire sécurisée distincte de la mémoire principale, chaque pointeur étant associé à un identifiant du bloc de données.

11. Méthode selon la revendication 10 dans laquelle cette mémoire sécurisée distincte est placée dans un module de sécurité amovible telle qu'une carte à puce.

## Claims

1. Storage method of a plurality of data blocks in a digital re-writable memory of semiconductors controlled by a memory manager, said method comprising the following steps:
- randomly determining an available area,
- storing the data block in the area chosen in this way.

2. Method according to claim 1, comprising a previous exploration step of the memory made by the memory manager, said exploration determining the available areas.

3. Method according to claim 2, wherein the result obtained after exploring the memory constitutes a list with the addresses of the available areas stored temporarily in a second memory, an address is then chosen randomly from said list and then the data block is stored in the area of the memory indicated by this address.

4. Method according to claim 2, wherein the exploration of the memory determines the number of available areas, a number between 1 and the number of areas found is randomly chosen and used to designate the area where the block must be stored.

5. Method according to claim 1, wherein a number N between 1 and the maximum number of available areas possible is randomly determined, the memory manager sequentially searches the Nth available area and, if is the end of the memory is reached before finding said area, the memory manager restarts the search from the beginning of the memory until it reaches the Nth available area.

6. Method according to claims 1 to 5, wherein the blocks are of variable length, the storage of a block in the memory being made in an available area of a length equal or longer than the block length.

7. Method according to claims 1 to 5, wherein the data blocks are all the same length, the memory available areas having a length equal or longer than a multiple of the length of the blocks.

8. Method according to claims 1 to 6, comprising a previous step of determination of the current length m of the blocks to be memorized, the blocks Bn of a shorter length than said current value are stored at a pitch m from the preceding block in order to leave a free space equal to the difference between the current length m and the block Bn length, the blocks Bn of equal length or longer than the current length m being stored immediately after the preceding block.

9. Method according to claim 1, wherein the memory is with direct access to the data through a pointer table, said pointers being chosen randomly before storage of the data blocks in the memory.

10. Method according to claim 9, wherein the pointer table is stored in a secured memory different from the main memory, each pointer being associated to an identifier of the data block.

11. Method according to claim 10, wherein said different secured memory is located in a removable security module such as a smart card.

## Patentansprüche

1. Verfahren zur Speicherung einer Mehrzahl von Datenblöcken in einem wiederbeschreibbaren, digitalen Halbleiterspeicher, der von einem Speichermanager gesteuert wird, wobei das Verfahren die folgenden Schritte umfasst:
- zufallsbedingte Festlegung eines verfügbaren Bereiches,
- Speicherung des Datenblocks in dem so gewählten Bereich.

2. Verfahren nach Anspruch 1, einen vorhergehenden Schritt umfassend, in dem der Manager eine Erkundung des Speichers ausführt, durch die die verfügbaren Bereiche ermittelt werden.

3. Verfahren nach Anspruch 2, bei dem das nach Erkundung des Speichers gewonnene Ergebnis eine Liste von Adressen verfügbarer Bereiche darstellt, die zeitweilig in einem zweiten Speicher aufbewahrt wird, danach eine Adresse zufallsbedingt aus dieser Liste ausgewählt und dann der Datenblock in dem durch diese Adresse angezeigten Bereich des Speichers gespeichert wird.

4. Verfahren nach Anspruch 2, bei dem durch die Erkundung des Speichers die Anzahl von verfügbaren Bereichen bestimmt und durch zufallsbedingte Auswahl einer Zahl zwischen 1 und der gefundenen Anzahl von Bereichen der Bereich festgelegt wird, in dem der Block gespeichert werden soll.

5. Verfahren nach Anspruch 1, bei dem zufallsbedingt eine Zahl N festgelegt wird, die zwischen 1 und der maximal möglichen Anzahl verfügbarer Bereiche liegt, der Speichermanager sequenziell den N-ten verfügbaren Bereich sucht und, sofern das Ende des Speichers erreicht ist, ehe der benannte Bereich gefunden worden ist, der Manager die Suche vom Speicheranfang an erneut aufnimmt, bis der N-te verfügbare Bereich gefunden worden ist.

6. Verfahren nach Ansprüchen 1 bis 5, bei dem die Blöcke von variabler Länge sind und die Speicherung eines Blocks im Speicher in einem verfügbaren Bereich erfolgt, der die gleiche Länge wie der Block oder eine grössere Länge besitzt.

7. Verfahren nach Ansprüchen 1 bis 5, bei dem die Datenblöcke alle von gleicher Länge sind, wobei die verfügbaren Speicherbereiche eine Länge besitzen, die gleich einem Mehrfachen der Länge der Blöcke oder grösser ist.

8. Verfahren nach Ansprüchen 1 bis 6 mit einem vorangehenden Schritt der Bestimmung der üblichen Länge m von zu speichernden Blöcken, wobei die Blöcke Bn mit einer geringeren Länge als dem benannten üblichen Wert mit einem Schritt m vom vorhergehenden Block gespeichert werden, um einen freien Raum zu lassen, der gleich der Differenz zwischen der üblichen Länge (m) und der Länge des Blocks (Bn) ist, und die Blöcke (Bn) mit einer Länge, die gleich der üblichen Länge (m) oder grösser als diese ist, unmittelbar hinter dem vorangehenden Block gespeichert werden.

9. Verfahren nach Anspruch 1, bei dem der Speicher ein Speicher mit direktem Zugriff auf die Daten mittels einer Zeigertabelle ist und die Zeiger zufallsbedingt vor der Speicherung der Datenblöcke im Speicher gewählt werden.

10. Verfahren nach Anspruch 9, bei dem die Zeigertabelle in einem gesicherten, vom Hauptspeicher getrennten Speicher gespeichert werden, wobei jeder Zeiger mit einer Kennung des Datenblocks verknüpft ist.

11. Verfahren nach Anspruch 10, bei dem dieser getrennte, gesicherte Speicher in einem abnehmbaren Sicherheitsmodul wie einer Chipkarte untergebracht ist.
